(19) Europäisches Patentamt
European Patent Office
Office européen des brevets

(11) **EP 2 410 406 A1**

(12) **EUROPEAN PATENT APPLICATION**

(43) Date of publication:
**25.01.2012 Bulletin 2012/04**

(51) Int Cl.:
*G06F 3/033* (2006.01)    *G06F 3/03* (2006.01)

(21) Application number: **10170672.9**

(22) Date of filing: **23.07.2010**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**
Designated Extension States:
**BA ME RS**

(71) Applicant: **Anoto AB
227 22 Lund (SE)**

(72) Inventor: **Ericson, Petter
211 49, Malmö (SE)**

(74) Representative: **Grönlund, Tim Linus Wilhelm
Anoto AB
Box 4106
227 22 Lund (SE)**

(54) **Display with coding pattern**

(57) A display (20) comprises a first surface comprising an array of pixels (22), the pixels (22) in the array being aligned to define an array x-axis and an array y-axis. The display (20) further comprises a second surface (32) overlying the first surface, the second surface (32) being provided with a coding pattern (40), which comprises marks (46) arranged according to a grid, the grid being arranged to define a grid x-axis and a grid y-axis. The grid x-axis overlies the array x-axis in a manner such that the grid x-axis is offset by an angle with respect to the array x-axis.

*Fig 3*

EP 2 410 406 A1

## Description

Field of the Invention

The invention relates to user interaction with a display. In particular, the invention relates to a product to be placed on a display, the product being provided with a coding pattern for allowing recording of information encoded on the display.

Background Art

Digital devices are used in all aspects of life. It is becoming increasingly common that the digital devices have some kind of display for presenting information to a user. This could be TV screens, computer monitors, tablet PCs, mobile phones, or terminals, such as self-service kiosks. The digital devices also allow a user to input information in order to interact with the device. In this regard, there are a number of different input devices, such as keyboards, mouses, joysticks, and digital pens.

When interacting with a digital device having a display, it would often be very convenient to be able to input information on the display itself. This allows the user to always focus on the display and the user need not shift his eyes between the display and an input device.

In this regard, touch screens have been developed. The touch screens are becoming increasingly popular as the sensor technology is becoming cheaper and more accurate. However, the cost of a touch sensing technology is highly dependent on the size of the display. This implies that when a large display is to be used, using a touch sensing technology becomes very expensive. Therefore, there is a need for a cheaper technology for sensing positions on a display.

Using a passive position-coding pattern for coding positions is known in the field of electronic capture of handwriting on paper. Here, the sensor is arranged in a digital pen. This implies that there is no advanced technology arranged in the surface. Hence, the cost of providing a surface with a position-coding pattern is rather low and virtually independent of the size of the surface. Instead, the sensor is placed in the digital pen and, therefore, the sensor size is always the same and need not be arranged in the entire surface.

In WO 01/48591, it is suggested that a position-coding pattern is integrated in or arranged upon a computer screen. Alternatively, the position-coding pattern could be displayed electronically on a computer screen or some other display screen. However, the first solution requires that the display is manufactured with a position-coding pattern. This implies that the technology could not be used for old displays, which have already been produced without a position-coding pattern. The second solution is difficult to accomplish, since the position-coding pattern needs to be very accurately generated in order to be properly detected.

It has also been suggested to arrange a position-coding pattern on a transparent plate, which may be arranged on a display, as disclosed in JP 2001-243006. The arrangement of the position-coding pattern on a display should preferably not affect the visibility of the image being displayed. This is accomplished, according to JP 2001-243006, by forming a position-coding pattern by invisible elements. In this regard, the position-coding pattern could be arranged to reflect infrared or ultraviolet radiation.

According to JP 2002-149331, a position-coding pattern on a transparent plate could be formed by dot arrays, which are intermittently arranged to code x- and y-coordinates. Dot arrays in which x-coordinate values are coded and dot arrays in which y-coordinate values are coded are alternately arranged and formed at almost the same pitch as a pixel pitch of a display pixel. Further, adjacent dot arrays are arranged with a large spacing between them, such that a total area covered by dots is very small with respect to the entire area of the plate provided with position-coding pattern. Therefore, according to JP 2002-149331, there is hardly any adverse effect on the displayed image caused by the dot arrays.

Summary of the Invention

It is an object of the invention to provide a product with a coding pattern which is suited for application to various displays. It is a further object of the invention that the coding pattern does not interfere with the displayed image.

According to a first aspect of the invention, it relates to a product, which comprises a surface, the surface comprising edges to define a surface x-axis and a surface y-axis; the surface further being provided with a coding pattern, which comprises marks arranged according to a grid, the grid being arranged to define a grid x-axis and a grid y-axis; wherein the grid x-axis is offset by an angle with respect to the surface x-axis.

The product provides a possibility to arrange the coding pattern on any display. The product may be portable and removably attachable to a display, such that the product may be switched between different displays.

A display comprises an array of pixels, which are controlled to form an image on the display. The pixels in the array are aligned to define an array x-axis and an array y-axis. Normally, the array x-axis and the array y-axis will be parallel to respective edges of the display. When the product is to be attached to a display, it is practical to arrange the edges of the surface in parallel with respective edges of the display. This implies that the surface x-axis will be aligned with the array x-axis. Thanks to the grid x-axis being offset by an angle with respect to the surface x-axis, the grid x-axis will also be offset by an angle with respect to the array x-axis of a display to which the product is attached. It has been realized according to the invention that arranging a grid x-axis to form an angle to the array x-axis, interference problems between the grid of the coding pattern and the pixel pitch of the display may be avoided. Hence, the product may be suitable for use with any display regardless of the characteristics of the display. Thus, the same product may be switched between different displays without a need to consider the pixel pitch of the displays. Further, there is no need to produce products that are specially adapted to different pixel pitches.

Alternatively, the product may be fixedly attached to a specific display. In such an embodiment, the pixel pitch of the display with which the product is associated may be known in advance. Hence, it would be possible to adapt a grid size to the pixel pitch of the display. However, if the grid size and the pixel pitch are not closely harmonized, i.e. the grid size being equal to an integer multiple of the pixel pitch or the pixel pitch being equal to an integer multiple of the grid size, interference problems may occur. Therefore, by ensuring that the grid x-axis is offset by an angle to the surface x-axis, the accuracy requirements in arranging the coding pattern on the product may be lowered. This implies that the manufacturing costs of the product may decrease.

Furthermore, since there is no need to adapt a grid size of the coding pattern to a pixel pitch of the display, different products intended for different types of displays may all be provided with coding patterns having identical grid size. This implies that a reader for reading the coding pattern may be optimized for use in reading a coding pattern having a predetermined grid size. This reader may then be used for reading the coding pattern of any product, regardless of the type of display the product is associated with.

The product may be transparent to visible radiation. This implies that the product, when applied to a display, will not affect the visibility of the displayed image. However, the coding pattern need not be transparent. The coding pattern may, for instance, comprise white marks, which may reflect infrared radiation. This coding pattern will hardly be visible to a user and may mainly provide a general shift of the brightness of the displayed image. Further, as described above, since the grid x-axis is offset by an angle to an array x-axis of the display, interference problems between the grid of the coding pattern and the pixel pitch of the display may be avoided.

In an embodiment, the grid x-axis is offset by an angle to the surface x-axis such that a flexibility in the relationship between the grid size of the coding pattern and a pixel pitch of the display is allowed without causing a moiré interference. In one embodiment, the grid x-axis is offset by an angle of about 10-15° or 25-35°. A suitable offset angle is dependent on the relationship between the grid size and the pixel pitch. Using an offset angle of about 10-15° or 25-35° allows the surface to be used with displays having varying pixel pitches without any moiré interference effects occurring. However, for specific relationships between the grid size and the pixel pitch, other offset angles may be more suitable.

In another embodiment, the pixel pitch of the displays, with which the product is to be used, is determined before production of the product. Using the known pixel pitches, an analysis is made of the moiré interference effects for different offset angles between the coding pattern having a fixed grid size and the different pixel pitches. The analysis may be used for determining a suitable offset angle.

For instance, one product may be intended to be used with large TV screens, whereas other products may be intended to be used with small laptop displays or mobile phone displays. The pixel pitch for these different types of screens may be quite different. Hence, an analysis may be made to determine a suitable offset angle for the particular product. Thereafter, the coding pattern is provided on the particular product using a determined suitable offset angle.

The coding pattern may comprise virtual grid lines, which intersect each other to form grid intersections, wherein at least some marks are displaced from the grid intersections to code information and the direction of displacement of a mark from the grid intersection determines the value coded by the mark. Some grid lines may be indicated by means of marks being placed in grid intersections. This may facilitate detection of the grid lines.

In another embodiment, the coding pattern may comprise marks, which are regularly placed to define a grid. In this embodiment, each mark may be placed in a grid intersection of virtual grid lines. The marks may then have different shapes or colours in order to code information.

A grid size of the coding pattern may correspond to the distance between recurring characteristics of the coding pattern. Where the coding pattern is formed by virtual grid lines, the grid size of the coding pattern corresponds to the distance between adjacent grid lines.

The grid may have a rectangular pattern. For a display having rectangular pixels, this implies that the grid y-axis will relate to the array y-axis in the same manner as the grid x-axis relates to the array x-axis. However, the grid may also have other configurations. For example, the grid may be triangular. In this case, the grid y-axis will not relate to the array y-axis in the same manner as the grid x-axis relates to the array x-axis. However, moiré interference may still be avoided by arranging the grid x-axis to be offset by an angle with regard to the array x-axis, as long as the grid y-axis is also offset by an angle with regard to the array y-axis. This implies that the range of possible angles is different for the triangular configuration.

The coding pattern may be arranged to code positions. Hence, the surface may be provided with a position-coding pattern, which codes positions on the surface such that when the position-coding pattern from a particular portion of the surface is read, it is possible to decode the location of the particular portion on the surface. The position-coding pattern may be calibrated to a display on which the surface is arranged. This implies that detected positions on the surface may be related to corresponding positions on the display.

The position-coding pattern may provide positions expressed as coordinates along the grid x-axis and grid y-axis. In order to convert such coordinates to corresponding display coordinates, the calibration needs to adjust for the offset angle between the grid x-axis and the array x-axis of the display. Thus, the calibration may provide a two-dimensional transformation function for converting recorded grid coordinates to corresponding display coordinates.

Using a movable reader, such as an electronic pen, positions on the surface may be read and inputted to a digital device for controlling the digital device. For instance, the input from the electronic pen may be interpreted as emulating a mouse and by pointing to positions on the display, actions corresponding to pointing with a mouse cursor and clicking in the detected positions may be achieved.

According to a second aspect of the invention, it relates to a display, comprising a first surface comprising an array of pixels, the pixels in the array being aligned to define an array x-axis and an array y-axis; a second surface overlying the first surface, the second surface being provided with a coding pattern, which comprises marks arranged according to a grid, the grid being arranged to define a grid x-axis and a grid y-axis; wherein the grid x-axis overlies the array x-axis in a manner such that the grid x-axis is offset by an angle with respect to the array x-axis.

According to the second aspect of the invention, a coding pattern is arranged overlying an array of pixels, wherein the grid x-axis is offset by an angle with respect to the array x-axis. As explained above with regard to the first aspect of the invention, this implies that interference problems between the grid of the coding pattern and the pixel pitch of the display may be avoided. Hence, there is no need to use a coding pattern which is specially adapted to the pixel pitch of the display.

In one embodiment, the second surface may be arranged on a product which is removably attached to the display. The display may further comprise a holder, which is attached to the display and arranged to receive the product for mounting the second surface in front of the first surface, wherein the holder is arranged to control the mounting of the second surface in relation to the first surface such that the grid x-axis is offset by an angle with respect to the array x-axis.

Since the grid x-axis is offset by an angle to the array x-axis, the arrangement of the coding pattern in relation to the array of pixels is not critical in order to avoid interference problems. Hence, the mounting of the holder in relation to the display and the mounting of the product in relation to the holder need not be very accurately controlled. This implies that the holder may be of a simple construction, which does not need to include large guiding surfaces for controlling the placement of the product in relation to the display. In one embodiment, the holder may simply be formed by two clips which are attached to the display and arranged to receive and firmly hold the product in place. Also, a user need not be very careful to correctly mount the product to the display, which facilitates the mounting of the product. In one embodiment, the holder may be configured to arrange the product in relation to the display such that the grid x-axis is offset by an angle of about 10-15° or 25-35° to the array x-axis. Further, the coding pattern may be calibrated to the display in order to determine the relationship between the mounted product and the display once the product has been firmly mounted.

According to a third aspect of the invention, it relates to a method in a processing device, said processing device being connected to a display for user interaction, the display comprising a first surface comprising an array of pixels, the pixels in the array being aligned to define an array x-axis and an array y-axis; a second surface overlying the first surface, the second surface being provided with a position-coding pattern, which comprises marks arranged according to a grid, the grid being arranged to define a grid x-axis and a grid y-axis; wherein the grid x-axis overlies the array x-axis in a manner such that the grid x-axis is offset by an angle with respect to the array x-axis, said method comprising: controlling the display to indicate at least two calibration marks on the display in display coordinates determined by the processing device; receiving grid coordinates representing positions in the position-coding pattern corresponding to the displayed at least two calibration marks; determining a conversion function for correlating a grid coordinate to a corresponding display coordinate based on the received grid coordinates and the known display coordinates of the at least two calibration marks; receiving a subsequent grid coordinate representing user input on the display; converting the subsequent grid coordinate to a corresponding display coordinate using the determined conversion function; and performing an action associated with a user interaction with the display coordinate.

According to the third aspect of the invention, it is possible to arrange the position-coding pattern with a grid x-axis offset by an angle with respect to the array x-axis of the display in order to avoid interference problems. A calibration is performed in order to take into account that the position-coding pattern is angled with respect to the display. Hence, the processing device is still able to correctly handle positions recorded with a position-coding pattern which is angled to the display.

A correct coordinate conversion function may be obtained using only two calibration marks, if the second surface provided with the position-coding pattern is arranged in parallel with the first surface comprising the array of pixels. However, if the first and second surfaces are not parallel, there is a three-dimensional relationship between the surfaces. Hence, in order to obtain a more accurate calibration, which may also take account of the first and second surfaces not being mounted in a parallel relationship; four or more calibration marks may be used.

In one embodiment, the processing device runs one or more applications which may output information to a display and may receive input as positions on the display. The performing of an action associated with a user interaction with the display coordinate may then comprise sending the display coordinate to an active application that is run on the processing device. The active application may interpret the display coordinate as a mouse interaction in that position of the display. This implies that a user may use a reader for reading the position-coding pattern, e.g. in the form of an electronic pen, as an alternative to a mouse for interacting with the processing device.

Brief Description of the Drawings

The embodiments of the invention will now be described in more detail with reference to the accompanying drawings.

Fig. 1 is a schematic view of a system for providing user interaction with an electronic device.
Fig. 2 is a schematic view of a display illustrating an array of pixels.
Fig. 3 is a schematic view of a product provided with a coding pattern.
Fig. 4 is a schematic view illustrating a product removably attached to a display.
Figs 5A-F are schematic views of a coding pattern.
Fig. 6 is a longitudinal section schematically illustrating an electronic pen.
Fig. 7 is a schematic view illustrating user interaction with an electronic device via a display.

Detailed Description of a Preferred Embodiment

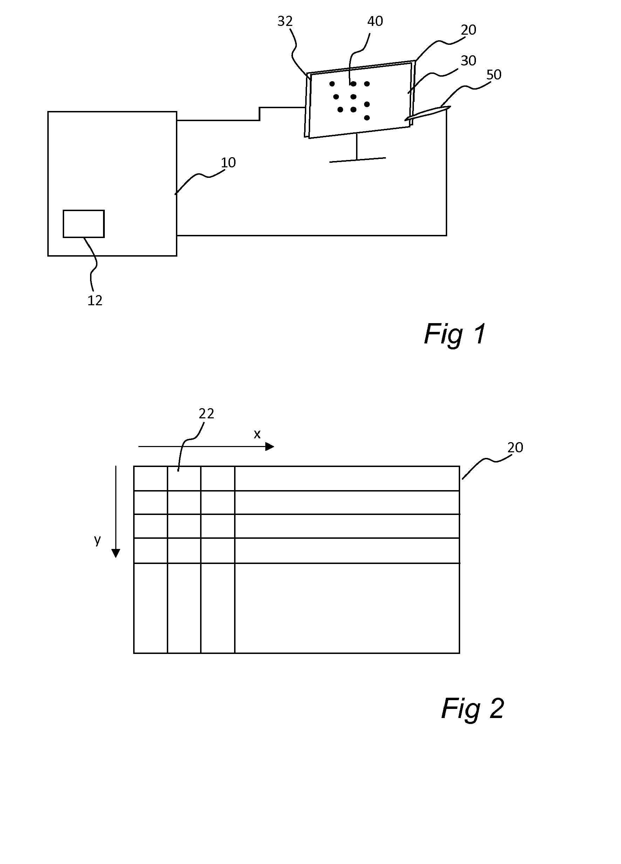

Referring to Fig. 1, a system for providing user interaction with an electronic device 10 will be briefly described. The electronic device 10 comprises a processor 12, which is connected to a display 20 for providing output to a user and presenting results of information processed by the processor 12. A product 30 is fixedly or removably attached to the display 20. The product 30 comprises a surface 32 which is provided with a coding pattern 40. The coding pattern 40 codes information on the surface 32. A user may interact with the processor 12 using a reader 50 which is able to read the coding pattern 40. The user may thus point the reader 50 to different parts of the display, thereby triggering different parts of the coding pattern 40 to be read by the reader 50. In this way, the reader 50 is able to record information encoded by the coding pattern 40 and send the recorded information as input to the processor 12. The processor 12 may process the recorded information and present results to the user by updating an image on the display 20.

The surface 32 provided with a coding pattern 40 may be applied to any kind of display for allowing user interaction with an electronic device 10 via the coding pattern 40. Hence, the electronic device 10 may, for instance, be a personal computer (PC), such as a desktop computer, a laptop, a tablet PC, or a handheld PC, a mobile phone, a video game console, or a terminal, such as a self-service kiosk or an arcade machine. The processor 12 is typically arranged within the electronic device 10. The processor 12 may comprise a display controller for creating a signal which may be correctly interpreted by the display 20 for outputting an image on the display 20.

The display 20 may be a separate unit, which may be connected to the electronic device 10 and the processor 12. The display 20 may be connected to the electronic device 10 via a cable or a wireless connection using e.g. a radio signal. Such a display 20 may also be connectable to different kinds of electronic devices 10 for providing a user interface to the electronic device 10 presently connected to the display 20. Examples of such displays 20 are TV screens or computer monitors using any type of technology for displaying images, such as cathode-ray tube screens, liquid crystal displays or plasma display panels. Alternatively, the display 20 may be integrated with the electronic device 10 in a single physical unit. Examples of such displays 20 are laptop screens, or displays of a tablet PC, a handheld PC, a mobile phone, a video game console or a terminal, such as a self-service kiosk or an arcade machine.

As shown in Fig. 2, the display 20 comprises pixels 22, which are activated to create an image on the display 20. In a colour display, each pixel 22 comprises three dots coloured red, green and blue. The pixels 22 are arranged to cover an entire surface of the display 20 forming an array of pixels 22. The size of a pixel 22 and the spacing between adjacent pixels 22 define a pixel pitch of the display 20. This pixel pitch is a measure of the size of the smallest individual element of an image that will be shown on the display 20. The pixels 22 in the array form a structure which is periodic over the display surface. Hence, the pixel pitch also defines a spatial frequency of the pixels 22 on the display 20.

Pixels 22 are normally arranged in horizontal and/or vertical lines on the display surface. The array of pixels 22 may therefore define an array x-axis and an array y-axis, which are arranged along a horizontal and a vertical direction of the display surface, respectively.

The pixel pitch, which is sometimes also called dot pitch, line pitch, stripe pitch or phosphor pitch, may vary between different displays 20. By providing a smaller pixel pitch, the display 20 may be able to produce a sharper image. Also, a user may be typically watching different types of displays 20 from different distances. For instance, a user will typically be closer to a display of a mobile phone than to a computer screen. This implies that the computer screen may have a larger pixel pitch than the mobile phone display without a user experiencing the image quality of the computer screen to be worse than the image quality of the mobile phone display. Hence, the pixel pitch varies quite heavily between different types of displays 20 and also between displays 20 of the same type, depending on the quality of the displays 20.

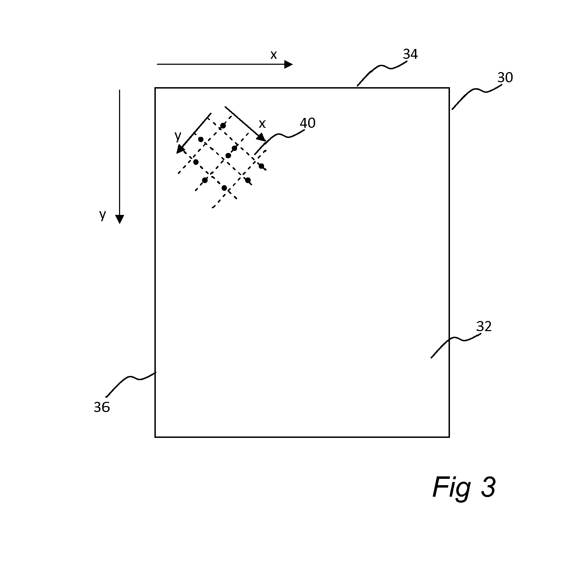

Referring now to Fig. 3, a product 30 which is provided with a coding pattern 40 will be further described. The product 30 may be integrated with the display 20 and may be attached to the display 20 during manufacturing of the display 20. According to an alternative, the product 30 may be delivered separately and may be attached to the display 20. The product 30 may be removably attached to the display 20 such that the product 30 may be moved between different displays 20.

The product 30 may be formed of a sheet or film, which is transparent to visible light. This implies that the product 30 will not affect the visibility of the displayed image, when the product 30 is applied to the display 20. The thickness of the sheet or film may vary depending on what type of display 20 the product 30 is to be used with. The product 30 may be formed from a suitable plastic material having appropriate optical and physical characteristics.

The display 20 may or may not be prepared for allowing touch interaction with the display surface. If the display 20 is prepared for touch interaction, it may be provided with a protective sheet, which may distribute applied pressure such that the applied pressure in touching the display does not damage the display 20. However, if the display 20 is not prepared for touch interaction, the product 30 may need to be designed to protect the display 20 from being damaged by the product 30 being touched. In such cases, the product 30 may be formed by a relatively thick sheet, which may distribute the applied pressure over a larger surface. Hence, in order to protect a display 20, the product 30 may be formed by a sheet having a thickness of typically a few mm.

The product 30 may be held in a constant relationship to the display 20. This implies that the relationship between the coding pattern 40 and the display positions does not change over time. The ability to hold the product 30 in a constant relationship to the display 20 depends on several factors. For instance, by providing a thick and rigid product 30, the product 30 may stay in place once mounted to the display 20. For instance, if the product 30 is to be used with large TV screens, a large-size product 30 may be needed. Hence, the product 30 may be formed from a sheet having a thickness in the magnitude of a mm in order to provide a rigid product 30. The thick sheet product 30 enables a large-size product 30 to be firmly held in a constant relationship to the display 20.

On the other hand, a small-size product 30 may be formed by a thin film, having a thickness of much less than 1 mm, typically 0.1-0.5 mm. Such a thin film may be suitable for arranging the product 30 in a constant relationship to e.g. a mobile phone display or a laptop screen. A thin film product 30 may also be sufficiently elastic to be rolled up for facilitating transportation of the product 30. This implies that the product 30 may be carried by a user and be attached to any display 20, when the user wants to be able to interact with the display 20.

The product 30 may be intended to be attached to displays 20 of a specific size. In this regard, the product 30 may be of approximately the same size as the display 20 with which it is to be used. This implies that the product 30 may be arranged in an edge-to-edge relationship to the display 20 so as to fit snugly to the display 20. However, the product 30 may alternatively be intended to be used with displays 20 of different sizes. Then, the product 30 may be attached to the display 20 such that the product 30 protrudes outside at least one of the edges of the display 20. It may also be contemplated that the product 30 only covers a part of the display 20 in order to provide interaction with that specific part of the display 20. The product 30 may be rectangular in order to fit to the shape of most displays 20.

One or more portions of the product 30 may be provided with an adhesive material allowing the product 30 to be attached to the display 20. Alternatively, the product 30 may have a sticky surface, such that when applied to a display 20, it sticks to the display surface. As a further alternative, the product 30 and the display 20 may be provided with corresponding one or more patches of hook-and-loop fasteners, such as Velcro® fasteners. As yet another alternative, the product 30 may be provided with a clip for receiving an edge of the display 20. Of course, the display 20 may instead or also be provided with a means for the product 30 to be attached to the display 20, such as an adhesive material or a clip.

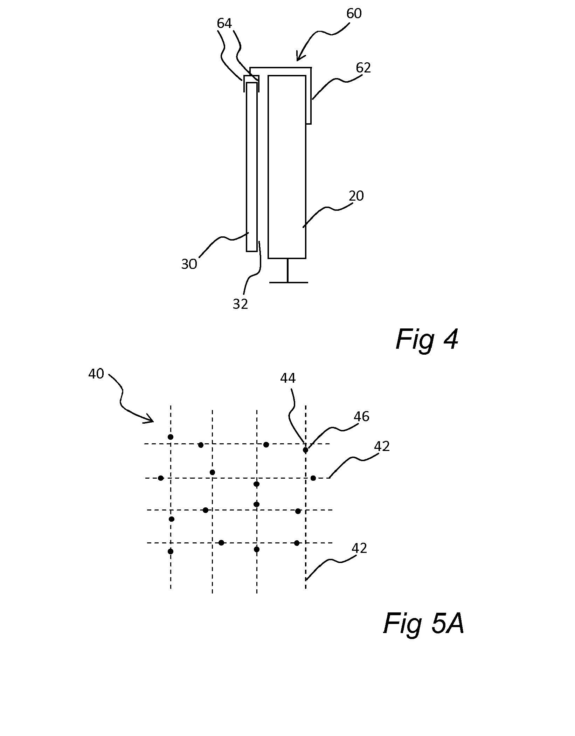

As yet another alternative, a separate fastener for attaching the product 30 to the display 20 may be provided. This may be achieved as a double-sided tape, which is attached to one of the product 30 or the display 20 before the product 30 is applied to the display 20. In one embodiment illustrated in Fig. 4, a holder assembly 60 is provided. The holder assembly 60 may comprise a frame 62, which may be firmly attached to the display 20, e.g. by means of screws. The holder assembly 60 may also comprise one or more clips or pairs of cooperating arms 64, which may be mounted on the frame 62. Upon mounting of the product 30 to the display 20, the product 30 is fitted into the clips or pairs of cooperating arms 64, which will fix the position of the product 30 in relation to the display 20.

The product 30 provides a surface 32, which may be provided with a coding pattern 40. The product 30 may be arranged to be attached to a display 20 such that the surface 32 is arranged facing the display 20. Alternatively, the surface 32 may be covered by a protecting layer. This implies that a user will not interact directly with the surface 32 on which the coding pattern 40 is arranged. Hence, the surface 32 is protected such that the user interaction, by e.g. touching the product using a reader 50, will not wear down the coding pattern 40.

The surface 32 of the product 30 may be limited by edges 34, 36, which define a surface x-axis and a surface y-axis. As explained above, the product 30 may be rectangular in order to correspond to the most common shape of displays 20. In such case, the edges 34, 36 may be perpendicular to each other and, hence, the surface x-axis and the surface y-axis would be perpendicular to each other.

The coding pattern 40 may provide a graphical coding of information. In this regard, the coding pattern 40 may comprise marks arranged according to a grid, wherein the placement and/or morphology of the marks code information.

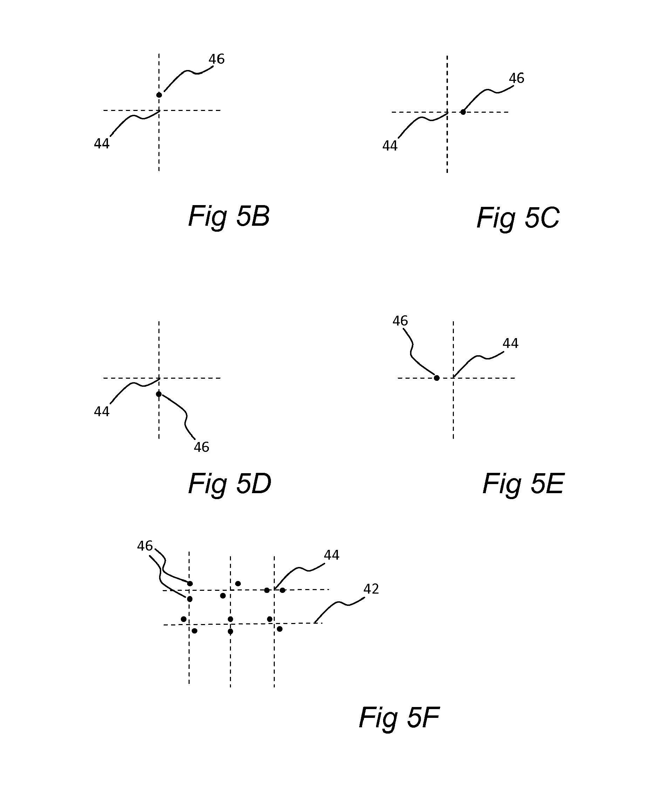

In one embodiment, illustrated in Fig. 5A, the coding pattern 40 comprises virtual grid lines 42, which are called virtual because they may not be actually presented on the surface 32. Therefore, the grid lines 42 are marked by dashed lines in Fig. 4. The virtual grid lines 42 may be perpendicular to each other forming an orthogonal grid. The virtual grid lines 42 intersect in grid intersections 44, wherein the grid intersections 44 form nominal points. The information of the coding pattern 40 may be coded by a mark 46, which is displaced in relation to its nominal point 44. The direction of displacement of the mark 46 from the nominal point 44 determines a value coded by the mark 46. For instance, the mark 46 may be allowed to be displaced in one of four different directions, as illustrated in Figs 5B-E. Then, each mark 46 will code two bits of information. The marks 46 may be displaced along one of the virtual grid lines 42 as illustrated in Figs. 5B-E. This type of coding pattern 40 is further described in US 6,663,008, which is hereby incorporated by reference.

Marks may also be provided in the grid intersections 44 or some of the grid intersections 44. This may help in detecting the virtual grid lines 42 and therefore facilitate decoding of the coding pattern 40. Further, each grid intersection 44 need not be associated with a mark 46 for coding information. In one embodiment, grid intersections 44 which are provided with a mark for indicating the grid lines 42 have no associated mark 46 for coding information, whereas grid intersections 44 which are not provided with a mark for indicating the grid lines are associated with a mark 46 for coding information.

Some nominal points 44 or each nominal point 44 may be associated with a plurality of marks 46 for coding information. This may be used for coding further information in relation to one nominal point 44. In one embodiment, illustrated in Fig. 5F, a nominal point 44 is associated with a pair of marks 46, which are arranged on opposite sides of the nominal point 44 such that the center of gravity of the pair of marks 46 is in the nominal point 44. This facilitates detection of the virtual grid lines 42.

The marks 46 may be formed by squares, triangles or any other simple shape. In one embodiment, the marks 46 are formed by circular dots, which may be easy to print. Alternatively, the marks 46 may have differing shapes, wherein the shape of a mark 46 may contribute to the coding of information of the coding pattern 40.

The marks 46 may be arranged to reflect infrared radiation. This may facilitate detection of the marks 46, since most displays 20 comprise an infrared filter and, therefore, no infrared radiation is emitted from the display 20. The reader 50 may be arranged to detect infrared radiation and, if combined with a light source emitting infrared radiation, the infrared reflective marks 46 will appear as bright spots on a dark background in the reader 50.

In order to ensure that radiation from the display 20 does not interfere with the detection of the coding pattern 40, the product 30 may be provided with an infrared filter layer. This infrared filter layer is to be arranged facing the display 20 such that it is not between the coding pattern 40 and the reader 50.

The infrared reflective marks 46 may be easily accomplished as white marks, which reflect both infrared radiation and visible radiation. This implies that the coding pattern 40 will be visible to a user. However, the coding pattern 40 may be formed by so small marks that the coding pattern 40 will merely be experienced as a general shift of the brightness of the displayed image.

The virtual grid lines 42 need not be arranged to form an orthogonal grid. In one alternative, a rhombic grid may be formed with the virtual grid lines 42 arranged at an angle of 60° to each other. In further alternatives, the virtual grid lines 42 may form a triangular or hexagonal grid.

The coding pattern 40 may be a position-coding pattern, which is arranged to code positions. In one embodiment, a cell of a plurality of marks 46 may be used for coding one position and possibly also an identifier, which may be used for distinguishing the product 30 from other products. Such cells may be arranged side-by-side across the surface 32 to code positions across the surface 32. In another embodiment, as described in e.g. US 6,663,008, the position-coding pattern has a windowing property, which means that each part of a predetermined size, is unique within the position code and thus codes an unambiguous position in the position-coding pattern. Each position may be coded by a plurality of simple symbols, like dots, and at least some of a plurality of symbols which are used for coding a first position also contribute to the coding of a second adjacent position.

The position-coding pattern may e.g. use 6 x 6 marks 46 for coding one position. This enables coding of positions in a very large area, such that different parts of the position-coding pattern may be arranged on different products 30. Hence, instead of using a coded identifier for identifying the product 30, the recorded position may identify the product 30 as each product 30 may be arranged to code different ranges of positions. This implies that the position-coding pattern 40 on a product 30 may code absolute positions within a large area. Hence, the origin of coordinates of the area need not be encoded on the product 30 itself. The absolute positions may be converted to local positions within a subset of the large area encoded by the position-coding pattern. The subset may encode positions within an area corresponding to the product surface 32. This may facilitate interpreting the absolute positions as local position on the product surface 32.

However, it may not be necessary to use such a large position-coding pattern. In another embodiment, fewer marks 46 are used for coding one position. This may make the decoding of a position faster.

In a further embodiment, the marks 46 are regularly placed across the surface 32. The marks 46 may have different shapes or colours in order to code information. Each mark 46 may have a complex structure in order to enable coding of a lot of information. Hence, a position on the surface 32 may be coded by a single mark 46.

The coding pattern 40 may form a structure which is periodic over the surface 32. The coding pattern 40 may comprise marks 46 arranged according to a grid, wherein the grid defines the periodicity of the marks 46 on the surface. A grid size of the coding pattern 40 may be defined as the distance between two adjacent grid lines 42 in the coding pattern 40. The grid size of the coding pattern 40 also defines a spatial frequency of the marks 46 on the surface 32. The spatial frequency of the marks 46 will be given by the grid size, even if individual marks 46 are displaced in different directions from grid intersections 44. The grid may also define a grid x-axis and a grid y-axis, which coincide with the virtual grid lines 42 of the coding pattern 40.

As described above, the pixel pitch defines a spatial frequency of the pixels 22 on the display 20. Further, the display 20 is overlaid by marks 46 arranged according to a grid having a grid size defining a spatial frequency of the marks 46 on the surface 32. This implies that there are two periodic structures which are arranged in a superposed manner. Hence, a convolution of these spatial frequencies or different integer multiples of these spatial frequencies may form another resulting frequency. If the resulting frequency is within frequencies perceptible by a human being, i.e. the frequency is quite small, the user may see a moiré pattern on the display 20. The moiré pattern may be very distinctive and severely affect the visibility of the displayed image.

It is therefore desirable to ensure that a moiré pattern is not formed on the display 20. One way of ensuring that a moiré pattern is not formed is to ensure that the grid size of the coding pattern 40 is adapted to the pixel pitch of the display 20. However, the coding pattern 40 may alternatively be rotated in relation to the display 20 such that the grid x-axis is offset by an angle with respect to the array x-axis. The rotation of the coding pattern 40 may provide a relationship between the grid of the coding pattern 40 and the array of pixels 22 such that a moiré pattern is unlikely to arise.

Thanks to the rotation of the coding pattern 40, the same product 30 may be used with different displays 20 without any need to consider whether the pixel pitch of the display 20 is compatible with the grid size of the coding pattern 40. This facilitates manufacturing of a portable product 30 which may be used with different displays 20.

Also, the same grid size of the coding pattern 40 may always be used. This implies that a reader 50 for reading the coding pattern 40 may be adjusted and optimized for reading a coding pattern 40 having a specific grid size. Further, the same reader 50 may be used for reading the coding pattern 40 regardless of which type of display 20 the coding pattern 40 is applied to.

Furthermore, it may be advantageous to use a coding pattern 40 which is rotated in relation to the display 20, even if the coding pattern 40 is arranged on a product 30 that is fixedly mounted to the display 20 during manufacture of the display 20. In such a situation, the pixel pitch of the display 20 which the coding pattern 40 will be superposed with is known and, therefore, it is possible to adapt the grid size of the coding pattern 40 to this pixel pitch. For instance, the grid size may be set to equal an integer multiple of the pixel pitch. However, the grid size needs to very closely meet the desired value in order not to give rise to moiré effects. Therefore, adapting the grid size of the coding pattern 40 to the pixel pitch of the display 20 may impose harsh requirements on manufacturing accuracy. Hence, the yield in production may be improved by rotating the coding pattern 40 in relation to the display 20.

The rotation of the coding pattern 40 in relation to the display 20 such that the grid x-axis is offset by an angle with respect to the array x-axis may be accomplished by rotating the coding pattern 40 in relation to the surface x-axis of the product surface 32. As discussed above, the product 30 may be arranged to be aligned with the display 20. Therefore, if the grid x-axis is offset by an angle with respect to the surface x-axis of the product 30, the grid x-axis will be similarly offset by an angle with respect to the array x-axis of the display 20, when the product 30 is attached to the display 20.

The product 30 may be destined to be used with certain types of displays 20. Before manufacturing the product 30, the range of different pixel pitches of the displays 20 with which the product 30 will be used may be determined. Further, the grid size of the coding pattern 40 to be used may be set. In one embodiment, the grid size is approximately 300 $\mu$m. Of course, other grid sizes may be used as well. For instance, the grid size may be in the range of 100 $\mu$m-2 mm. Using a set grid size and the known range of pixel pitches, the effect of different angles between the grid x-axis and the array x-axis may be analyzed. As explained in Chapter 3 of The Theory of the Moiré Phenomenon, Volume I: Periodic Layers by Isaac Amidror, relations between two superposed frequencies may be analyzed in order to identify angles which will give rise to moiré interference.

Having analyzed the effect of different angles between the grid x-axis and the array x-axis, angles which do not cause moiré problems may be determined. Hence, an allowable range of angles may be found within which no moiré effect will be visible. The coding pattern 40 could then be applied to the product 30 such that the grid x-axis forms an angle to the surface x-axis within the allowable range. This implies that a tolerance may be accepted in mounting the product 30 to the display 20, since a small change of the angle of the grid x-axis to the array x-axis will not introduce a moiré effect.

For example, the product 30 may be intended to be used with a computer monitor. A computer monitor having a screen size of 19 inches and a resolution of 1280 x 1024 pixels has a pixel pitch of 0.208 mm. If a product 30 having a grid size of 0.300 mm is to be used with this computer screen, the grid x-axis may be offset by an angle in the range of 10-35° with respect to the array x-axis in order to avoid moiré interference. Another product 30 may be intended to be used with a TV screen. A TV screen having a screen size of 42 inches and a resolution of 1920 x 1080 pixels has a pixel pitch of 0.342 mm. In this example, if a product 30 having a grid size of 0.300 mm is to be used with this computer screen, the grid x-axis may be offset by an angle in the range of 30-40° with respect to the array x-axis in order to avoid moiré interference.

According to another alternative, a suitable angle between the grid x-axis and the surface x-axis may be chosen without making a particular analysis of the grid size in relation to the pixel pitches to be used. In one embodiment, the grid x-axis may be arranged to be offset by an angle of 10-15° to the surface x-axis of the product 30. In another embodiment, the grid x-axis may be arranged to be offset by an angle of 25-35° to the surface x-axis of the product 30. In both these embodiments, a relationship may be provided between the grid of the coding pattern 40 and the array of pixels 22 of the display 20 such that no moiré effect is seen.

It should be realized that the arrangement of the coding pattern 40 on the product surface 32 may also take the relationship between the array x-axis of the display 20 and the surface x-axis of the product 30 into account. In some circumstances, it may be known quite accurately how the product 30 will be mounted in relation to the display 20. This may be e.g. when the product 30 is integrated into the display 20 during manufacture of the display 20 or when the attachment of the product 30 to the display 20 is accurately controlled by a holder 60. In such cases, the eventual relationship between the grid x-axis and the array x-axis may be well known. Hence, the coding pattern 40 could be applied to the product 30 such that the grid x-axis will form an angle to the array x-axis within an allowable range.

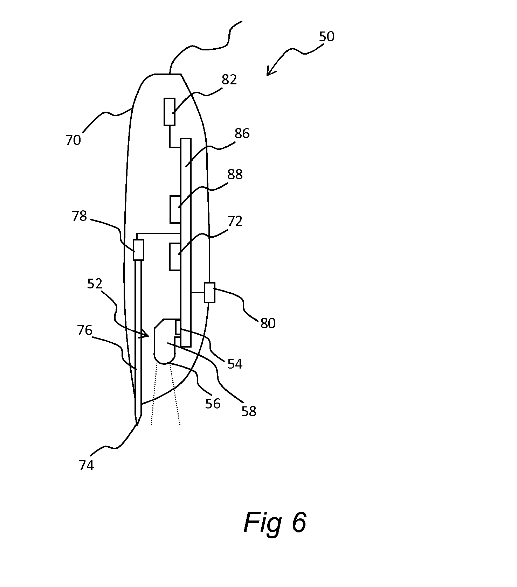

Referring now to Fig. 6, a reader 50 for reading a coding pattern 40 will be described. The reader 50 may comprise an optical system 52 for forming an image of the product 32 onto an optical image sensor 54, such as a charge coupled device (CCD) or complementary metal-oxide-semiconductor (CMOS) sensor, which is arranged to acquire a two-dimensional image. The optical system 52 may comprise a lens 56 for focussing the image onto the sensor surface. The optical system 52 may also comprise a light guide 58, which may include one or more mirrors for guiding the light to the optical image sensor 54. Also, the optical system 52 may comprise a wavelength filter for filtering out unwanted wavelengths. As explained above, the coding pattern 40 may be formed by infrared reflective marks 46. By only letting infrared radiation reach the optical image sensor surface, the image quality is improved.

The reader 50 may further comprise a light source (not shown). The light source may emit light towards the portion of the surface 32 that is being imaged. Thus, the imaging conditions may be improved. The light source may further be arranged to emit infrared radiation, which the coding pattern 40 will interact with in a strong manner.

The reader 50 may be formed as an electronic pen 70, as illustrated in Fig. 5. The electronic pen 70 may have a pen-type casing inside which all components of the electronic pen 70 are mounted.

The electronic pen 70 may further comprise an analyzing unit 72, which may be arranged to decode the coding pattern 40 based on an image recorded by the optical image sensor 54. In one embodiment, the optical image sensor 54 depicts a position-coding pattern on the surface 32 and the analyzing unit 72 is arranged to decode a position of the electronic pen 70. The analyzing unit 72 may be integrated with the optical image sensor 54 in order to directly determine the position of the electronic pen 70 upon an image being recorded. For example, the analyzing unit 72 may be realized as a customer-specific integrated circuit adapted for the purpose (for example ASIC, application-specific integrated circuit), which may also hold the optical image sensor 54. As an alternative, the analyzing unit 72 may be arranged to receive the recorded images from the optical image sensor 54. The analyzing unit 72 may then still be realized as a customer-specific integrated circuit, or of some form of programmable integrated circuit (for example PROM (Programmable Read-Only Memory), FPGA (Field-Programmable Gate Array)) or an ordinary processor running a special software program for determining the position based on the acquired position data.

As a further alternative, the optical image sensor 54 may be integrated in a customer-specific integrated circuit for preprocessing recorded images. For instance, the images may be preprocessed in order to detect locations of marks 46 in the image. The customer-specific integrated circuit may thus output a list of locations of marks 46 in the image to the analyzing unit 72, which may process the list to decode the coding pattern 40.

Alternatively, the electronic pen 70 may be arranged to merely record images and transmit the images to the electronic device 10 for analysis. In such case, the analyzing unit would be arranged in the electronic device 10. As a further alternative, the electronic pen 70 may be arranged to perform some preprocessing of the recorded images and transmit the preprocessed images to the electronic device 10 for finally decoding the imaged coding pattern 40.

The analyzing unit 72 may be arranged to analyze an image of a position-coding pattern 40 and decode the position coded by the portion of the position-coding pattern that is depicted in the image. The analyzing unit 72 would naturally have instructions that are dependent on the encoding scheme of the position-coding pattern 40 such that the decoding performed in the analyzing unit 72 is adapted to the specific position-coding pattern to be decoded. Examples of such decoding algorithms are provided in US 6,663,008 and US 6,667,695.

The marks 46 may be infrared reflective such that the marks 46 may appear as bright spots on a dark background in the image. The image may be recorded as a grayscale image comprising luminance values recorded by sensor pixels in the optical image sensor 54. In order to detect the locations of the marks 46 in the image, the analysis may first comprise a step of thresholding the image in order to form a binary image. This implies that each luminance value in the grayscale image is compared to a threshold value. If the luminance value is greater than the threshold value, the corresponding luminance value in the binary image is set to one (1), otherwise to zero (0). The output binary image thus contains bright objects (value 1) which ideally constitute the marks 46, against a dark background (value 0). The analysis may further comprise a step of identifying bright spots in the binary image and determining the locations in the image of the bright spots. The bright spots may be identified applying an edge filter to the binary image. The step of identifying the spots in the binary image may return a list of locations of the identified spots.

The electronic pen 70 may also be arranged to detect a coding pattern which is applied to another type of surface, such as a paper. This provides a versatility of the electronic pen 70. However, when the electronic pen 70 reads a coding pattern printed on paper, the coding pattern is typically formed by dark dots on a bright background. Thus, the thresholding filter may be inverted when the electronic pen 70 reads a dark coding pattern, such that the binary image would still contain spots having value 1 against a background having value 0. A user may control the electronic pen 70 to use the inverted filter. Alternatively, the electronic pen 70 may be arranged to detect an average luminance value of the image and apply the appropriate filter based on the average luminance value.

The electronic pen 70 may further comprise a pen tip 74 protruding from the casing for pointing the electronic pen 70 to the product 30. The pen tip 74 may be formed as a pointed end of a plastic stylus 76 which extends into the casing of the electronic pen 70. The stylus 76 is arranged not to leave any mark on the product 30 when applied to the product 30. The product 30 is to be used for interaction with a display 20 over a long period of time. Hence, it is desired that marks from previous interactions with the display 20 are not visible on the product 30.

The plastic stylus 76 may be replaceable with a writing implement having a writing tip forming the pen tip 74. The writing implement may be arranged to leave a pigment trace on a surface during writing with the electronic pen 70. This may be utilized if the electronic pen 70 is to be used with other surfaces than a display surface, such as a paper.

According to a further alternative, a stylus and a writing implement may be simultaneously mounted on the electronic pen 70. The writing implement and the stylus may be movable between extended and retracted positions in order to choose the tip that is to be used.

The electronic pen 70 need not have any pen tip 74 at all. Instead, the electronic pen 70 may have an annular flange forming a contact surface to be applied to the product 30 for pointing at desired positions.

The electronic pen 70 may comprise a pen down detector 78 for determining whether the electronic pen 70 has been applied onto the product 30. Thus, the pen down detector 78 detects when a user puts down the electronic pen 70 on the product 30 for commencing input of data with the electronic pen 70.

The pen down detector 78 may be a force sensor. The force sensor may be arranged at the opposite end of the stylus 76 to the tip 74. The stylus 76 may be movable such that a force is applied to the force sensor when the tip 74 is pressed down on the product 30. Alternatively, detection that the pen 70 is applied to a product 30 may be accomplished by the optical image sensor 54 of the electronic pen 70 being able to acquire an image of a surface 32 in focus. As a further alternative, the electronic pen 70 may comprise a light source and a light detector at a front end of the pen. The light source may be arranged to transmit light pulses and upon detection by the light detector of reflected light from a substrate within a predetermined time frame, the pen 70 may be determined to be applied to the product 30. Any combinations of these techniques may also be used.

The pen down detector 78 may be arranged to activate the recording of information in the pen 70. For instance, if a force sensor detects that the pen tip 74 is applied to a product 30, this detection may trigger the optical image sensor 54 to start acquiring images and the analyzing unit 72 to start analyzing the images. Alternatively, if the pen down detection is accomplished by means of detecting that a surface 32 has been imaged in focus, this pen down detection may trigger the analyzing unit 72 to start decoding an imaged coding pattern 40.

Further, the electronic pen 70 need not be physically applied to the product 30 in order to allow recording of information. The electronic pen 70 may be able to acquire images of the coding pattern 40 when the electronic pen 70 is held a small distance from the product 30, in a so-called hovering state. The electronic pen 70 may record information to indicate whether an image has been recorded while the pen 70 was applied to the product 30, in a pen-down state, or whether the image was recorded in a hovering state.

The electronic pen 70 may also comprise a button 80, which may be pushed by the user to control the electronic pen 70. For instance, the button 80 may be pushed to activate the recording of information in the electronic pen 70.

The electronic pen 70 may further comprise a communication unit 82 for communicating with the electronic device 10. The electronic pen 70 may be arranged to communicate with the electronic device 10 both through a wired connection and through a wireless connection.

The wired connection may e.g. be established by the electronic pen 70 comprising a connector for receiving a plug or for being introduced into a receptacle. The connector may be any kind of electrical connector, such as a USB (Universal Serial Bus) connector.

In order to provide communication through a wireless connection, the communication unit 82 of the electronic pen 70 may comprise a transceiver. The transceiver may be adapted to send a signal which may be received by a receiver of the electronic device 10 and receive signals transmitted from the electronic device 10. The transceiver may be arranged for short-range communication with the electronic device 10. For instance, the transceiver may be arranged to transmit and receive radio signals. In this regard, the transceiver may comprise an antenna. The transceiver may be arranged to communicate with the electronic device 10 over the Bluetooth protocol.

The electronic pen 70 may be arranged to transmit information to the electronic device 10 in real time. This implies that the electronic pen 70 continuously transmits information to the electronic device 10 as it is recorded by the pen 70. The transmitted information may be images acquired by the optical image sensor 54, preprocessed images, or decoded information, such as positions of the electronic pen 70.

The electronic pen 70 may also be powered via the connector to the electronic device 10. Alternatively, the electronic pen 70 may be powered by a battery. The battery may be rechargeable when the electronic pen 70 is connected to the electronic device 10.

The electronic pen 70 may further comprise a printed circuit board 86. A processor 88 may be mounted on the printed circuit board 86. The processor 88 may be arranged to control the functions of the electronic pen 70. In this regard, the different parts of the electronic pen 70, such as the pen down detector 78, the optical image sensor 54, the light source, and the communication unit 82 may also be connected and/or mounted on the printed circuit board 86. The printed circuit board 86 may be arranged to extend in a longitudinal direction of the electronic pen 70, which enables the electronic pen 70 to be manufactured with a small diameter. The electronic pen 70 may also comprise a carrier, which may form a mounting unit for controlling the mounting of the parts of the electronic pen inside the casing of the pen. An example of such a carrier is provided in WO 05/057471.

The reader 50 need not be formed as an electronic pen. The optical system 52 and the light source may be provided in any kind of housing. The housing may be suited to be handheld in order to facilitate handling of the housing by a user. Further, the housing may comprise a guiding surface for indicating to a user what portion of the product 30 in relation to the housing that will be imaged by the optical image sensor 54. As one example, the housing may have a mouse-type shape.

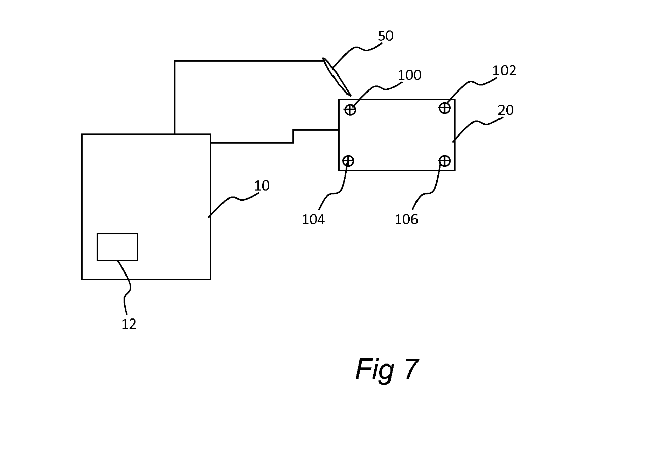

Referring now to Fig. 7, user interaction with an electronic device 10 via the display 20 will be described. The electronic device 10 may comprise a processor 12. The processor 12 may comprise a display controller for creating a signal which may be correctly interpreted by the display 20 for outputting an image on the display 20. The processor 12 may also run a control program for handling input from a reader 50.

The first time the control program is activated, the control program may perform a calibration for determining the placement of a position-coding pattern 40 in relation to an array of pixels 22 of the display 20. The calibration process may also be activated by a user if the product 30 has been moved or if the user experiences a mismatch between positions pointed to with the reader 50 and positions detected by the electronic device 10.

The display 20 may be manufactured and delivered with an attached product 30 having a position-coding pattern 40 on a surface 32. In manufacture of the display 20, the placement of the position-coding pattern 40 in relation to the array of pixels 22 of the display 20 may be determined. Hence, the position-coding pattern 40 may be calibrated to the display 20 during manufacture.

Alternatively, the product 30 may be delivered separately from the display 20. Hence, the first time the product 30 is applied to the display 20, the control program may initiate calibration. During calibration, the control program controls the display to show a first calibration mark 100 in a corner of the display 20. The user is prompted to point the reader 50 to the calibration mark 100. The reader 50 thus reads the position-coding pattern 40 overlying this display position and the position of the position-coding pattern 40 may be decoded. The calibration continues by the control program controlling the display to show further calibration marks 102, 104, 106 in the other corners of the display and the user pointing the reader 50 to these positions for determining the corresponding positions of the position-coding pattern 40.

In this way, four pairs of corresponding positions in the position-coding pattern 40 and display positions are determined. The control program may set up a set of equations using these pairs of corresponding positions. These equations may be as follows:

$$\begin{pmatrix} u_i \\ v_i \end{pmatrix} = \begin{pmatrix} k_1 & k_3 \\ k_2 & k_4 \end{pmatrix} \cdot \begin{pmatrix} x_i \\ y_i \end{pmatrix}$$

where $(u_i, v_i)$ are the display coordinates of point i and $(x_i, y_i)$ are the corresponding coordinates of the position-coding pattern of point i and $k_i$, $k_2$, $k_3$, and $k_4$ are constants of a conversion function for relating a position of the position-coding pattern to a display position. Using the four pairs of corresponding positions, a set of eight equations are generated with four unknowns, $k_1$, $k_2$, $k_3$, and $k_4$. Hence, an overdetermined equation system is obtained, which may be solved using e.g. a least-square method.

As explained above, the grid of the coding pattern 40 may be arranged such that a grid x-axis is offset by an angle with respect to the array x-axis of the display 20. The coordinates of the position-coding pattern 40 may be expressed as an x-coordinate along the grid x-axis and a y-coordinate along the grid y-axis. This implies that the conversion function needs to handle an angular displacement of the position-coding pattern in relation to the display. The control program therefore calculates a two-dimensional conversion function as described above, which will be able to handle the angular displacement.

The equation system could be solved using only two calibration marks. However, in order to obtain a more reliable conversion function, at least four calibration marks are used. Using four calibration marks would also allow determining a three-dimensional relationship between the grid coordinates and the display coordinates. Determining such a three-dimensional relationship may account for the product surface 32 not being mounted in a parallel relationship to a display surface.

Once the conversion function has been determined, the control program may use the conversion function in order to convert a recorded position of the position-coding pattern to a corresponding display position.

The control program may be arranged to forward recorded display positions to an active application, which controls the output to the display. For instance, the display positions may be forwarded to an operating system as mouse input, whereby the reader 50 may be interpreted as emulating a mouse. A recorded position when an electronic pen 70 is held in a hovering state may be interpreted as moving a mouse cursor, whereas a recorded position when the electronic pen 70 is in a pen-down state may be interpreted as a left-click of a mouse in the recorded position. Further, if a button 80 of the electronic pen 70 is pushed simultaneously with the applying of the electronic pen 70 to the product 30, this may be interpreted as a right-click of a mouse in the recorded position.

The processor 12 of the electronic device 10 may run a program specifically adapted to receiving input from a reader 50. This may be integrated in the control program described above. Such a specifically adapted program may be used in an electronic device 10 being intended for user interaction with a display 20, such as a self-service kiosk or a tablet PC. The display positions determined by the control program may be directly interpreted by the program performing an action associated with an interaction with the display position. For instance, the recorded display position may be interpreted as the user pushing a button displayed on the display 20 and the program may take appropriate action associated with the button being pushed.

A display 20 of an electronic device 10 may be provided with a coding pattern 40 during manufacture of the display 20. This implies that the display 20 is delivered with interaction capability allowing a user to provide input to the electronic device 10 by means of pointing a reader 50 to different positions on the display 20. During manufacture of the display 20, a product 30 provided with the coding pattern 40 is mounted on the display 20 and the coding pattern 40 may be calibrated to the display 20.

However, a product 30 may also be delivered as a stand-alone unit, which may be mounted to a display 20 when user interaction with the display 20 is desired. This implies that it is possible to provide touch screen functionality to displays 20 which have been manufactured without such functionality. Hence, a user may carry a product 30 in order to apply it to any display 20 when touch screen functionality is desired. This may be very suitable e.g. when making presentations and the presenter does not want to bring a display 20 having touch screen functionality to a conference room or lecture hall, but still wants to be able to interact with a display 20 during the presentation.

Finally, the manufacturing of a product 30 will now be explained. First, a sheet or film is produced of a plastic material having suitable optical and physical properties. The plastic material may need to be transparent to visible and infrared light. The plastic material may further need to be sufficiently rigid such that a sheet may be held in a constant relationship to a large-size display. However, in another embodiment, the plastic material may need to be sufficiently flexible in order to allow a film to be rolled up.

A surface 32 of the sheet or film is to be provided with a coding pattern 40. The coding pattern 40 is to be arranged on the surface 32 such that a grid x-axis of the coding pattern 40 is offset by an angle with respect to a surface x-axis.

A pattern generation algorithm may receive input of which information is to be coded by a coding pattern 40. For instance, the pattern generation algorithm may receive input of a range of positions to be coded by the coding pattern on the product 30. The pattern generation algorithm may calculate the graphical appearance of the coding pattern 40 and provide the information of the graphical appearance to a printing process for printing the coding pattern 40 onto the product surface 32.

In one embodiment, the pattern generation algorithm calculates the graphical appearance of a rectangular portion of x-coordinates and y-coordinates. This rectangular portion is then rotated by a predetermined angle, e.g. within a range of 10-15° or 25-35°, to form the image to be printed on the product surface 32. Hence, in order for the entire product surface to be provided with a coding pattern 40, the rectangular portion for which the graphical appearance is calculated need to be larger than the product surface 32.

In another embodiment, the pattern generation algorithm receives input of the offset angle to be used. The pattern generation algorithm may then calculate the graphical appearance of a rectangular portion of a coding pattern 40, wherein a grid x-axis is rotated by the offset angle in relation to an x-axis of the rectangular portion. This implies that the graphical appearance of the coding pattern 40 to be applied to the surface 32 is determined by the pattern generation algorithm.

In both the above-described embodiments, an image of the coding pattern 40 may be provided to a printer such that the product 30 may be aligned with the printer. By printing the image onto the product surface 32, the printer will produce a coding pattern 40 having a grid x-axis offset by an angle with respect to a surface x-axis.

In another embodiment, the pattern generation algorithm calculates the graphical appearance of a rectangular portion of x-coordinates and y-coordinates. This graphical appearance is provided to a printer which prints the coding pattern 40 to a product surface 32. After printing, the product 30 is cut with an angle to an edge of the surface, such that a rectangular product surface 32 is obtained, wherein a grid x-axis of the coding pattern is offset by an angle with respect to a surface x-axis. This implies that the surface area onto which the coding pattern 40 is printed need to be larger than the surface area of the cut-out product 30. Hence, using this manufacturing method, there will be a waste of product material. On the other hand, there is a very small risk of further spatial frequencies being introduced in the process of generating an image of the graphical appearance of the coding pattern or a process of creating a raster image in the printer for output of the generated image.

The product 30 may be further provided with a layer for protecting the printed coding pattern 40. This layer may be resistant to scratches from a stylus of an electronic pen. Also, the product 30 may be provided with a layer that absorbs infrared radiation in order to ensure that infrared radiation from the display 20 does not reach an optical image sensor 54 disturbing the detection of infrared reflective marks 46.

The invention has mainly been described above with reference to a few embodiments. However, as is readily appreciated by a person skilled in the art, other embodiments than the ones disclosed above are equally possible within the scope and spirit of the invention, which is defined and limited only by the appended patent claims.

For instance, the coding pattern 40 may be formed by marks 46 which have other optical characteristics for enabling detection of the marks 46 on the display 20. The marks 46 may reflect or absorb ultraviolet light. Alternatively, the product 30 may be provided with a layer of infrared reflective material and the marks 46 may absorb infrared radiation in order to be detected as dark spots on a bright background.

Also, the coding pattern 40 need not be arranged to code positions. The coding pattern 40 could code information, which may be directly interpreted as a request of a specific function to be performed by the electronic device 10. This may be especially effective for a product 30 that is permanently mounted to a display, such as a self-service kiosk. In such case, at least some parts of the display may be associated with a specific functionality, which may be indicated to the user. These parts may then be provided with a coding pattern 40 coding information which is directly interpreted by a control program as a request to provide the specific functionality.

**Claims**

**1.** A product, which comprises
a surface (32), the surface (32) comprising edges (34, 36) to define a surface x-axis and a surface y-axis;
the surface (32) further being provided with a coding pattern (40), which comprises marks (46) arranged according to a grid, the grid being arranged to define a grid x-axis and a grid y-axis;
wherein the grid x-axis is offset by an angle with respect to the surface x-axis.

**2.** The product according to claim 1, wherein the grid x-axis is offset by an angle of about 10-15° or 25-35° with respect to the surface x-axis.

**2.** The product according to claim 1 or 2, wherein the product is formed of a material transparent to visible radiation.

**3.** The product according to any one of the preceding claims, wherein the marks (46) are formed by an infrared reflective material.

**4.** The product according to any one of the preceding claims, wherein the coding pattern (40) comprises virtual grid lines (42), which intersect each other to form grid intersections (44), and wherein at least some marks (46) are displaced from the grid intersections (44) to code information.

**5.** The product according to any one of the preceding claims, wherein the coding pattern (40) is arranged to code positions expressed as coordinates along the grid x-axis and the grid y-axis.

**6.** A display, comprising

a first surface comprising an array of pixels (22), the pixels (22) in the array being aligned to define an array x-axis and an array y-axis; a second surface (32) overlying the first surface, the second surface (32) being provided with a coding pattern (40), which comprises marks (46) arranged according to a grid, the grid being arranged to define a grid x-axis and a grid y-axis; wherein the grid x-axis overlies the array x-axis in a manner such that the grid x-axis is offset by an angle with respect to the array x-axis.

**7.** The display according to claim 6, wherein the grid x-axis is offset by an angle to the surface x-axis such that a flexibility in the relationship between a grid size of the coding pattern (40) and a pixel pitch of the array of pixels (22) is allowed without causing a moiré interference.

**8.** The display according to claim 6 or 7, wherein the second surface (32) is arranged on a product (30) which is removably attached to the display (20).

**9.** The display according to claim 8, further comprising a holder (60), which is attached to the display (20) and arranged to receive the product (30) for mounting the second surface (32) in front of the first surface, wherein the holder (60) is arranged to control the mounting of the second surface (32) in relation to the first surface such that the grid x-axis is offset by an angle with respect to the array x-axis.

**10.** A method in a processing device (12), said processing device (12) being connected to a display (20) for user interaction, the display (20) comprising a first surface comprising an array of pixels (22), the pixels (22) in the array being aligned to define an array x-axis and an array y-axis; a second surface (32) overlying the first surface, the second surface (32) being provided with a position-coding pattern (40), which comprises marks (46) arranged according to a grid, the grid being arranged to define a grid x-axis and a grid y-axis; wherein the grid x-axis overlies the array x-axis in a manner such that the grid x-axis is offset by an angle with respect to the array x-axis, said method comprising:

controlling the display (20) to indicate at least two calibration marks (100, 102, 104, 106) on the display (20) in display coordinates determined by the processing device (12);
receiving grid coordinates representing positions in the position-coding pattern (40) corresponding to the displayed at least two calibration marks (100, 102, 104, 106);
determining a conversion function for correlating a grid coordinate to a corresponding display coordinate based on the received grid coordinates and the known display coordinates of the at least two calibration marks (100, 102, 104, 106);
receiving a subsequent grid coordinate representing user input on the display (20);
converting the subsequent grid coordinate to a corresponding display coordinate using the determined conversion function;
and performing an action associated with a user interaction with the display coordinate.

**11.** The method according to claim 10, wherein the performing of an action associated with a user interaction with the display coordinate comprises sending the display coordinate to an active application that is run on the processing device (12).

**12.** The method according to claim 11, wherein the performing of an action further comprises an active application interpreting the display coordinate as a mouse interaction in that position of the display (20).

*Fig 1*

*Fig 2*

*Fig 3*

Fig 4

Fig 5A

*Fig 5B*

*Fig 5C*

*Fig 5D*

*Fig 5E*

*Fig 5F*

Fig 6

*Fig 7*

Europäisches
Patentamt

European
Patent Office

Office européen
des brevets

# EUROPEAN SEARCH REPORT

**Application Number**

EP 10 17 0672

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2003 256137 A (KOKUYO KK) 10 September 2003 (2003-09-10) * the whole document * | 1-12 | INV. G06F3/033 G06F3/03 |
| Y | US 2009/273577 A1 (CHEN CHENG [US] ET AL) 5 November 2009 (2009-11-05) * abstract * * paragraphs [0001], [0004], [0005]; figure 1 * * paragraphs [0007], [0008] * | 1-12 | |
| A,D | WO 01/48591 A1 (ANOTO AB [SE]; ERICSON PETTER [SE]) 5 July 2001 (2001-07-05) * the whole document * | 1-9 | |
| Y,D | JP 2001 243006 A (RICOH ELEMEX CORP) 7 September 2001 (2001-09-07) * the whole document * | 1-12 | |
| A,D | JP 2002 149331 A (CANON KK) 24 May 2002 (2002-05-24) * the whole document * | 1-9 | TECHNICAL FIELDS SEARCHED (IPC) |
| A,D | US 6 663 008 B1 (PETTERSSON MATS PETTER [SE] ET AL) 16 December 2003 (2003-12-16) * the whole document * | 1 | G06F G06K |
| A,D | US 6 667 695 B2 (PETTERSSON MATS PETTER [SE] ET AL PETTERSSON MATS PETTER [SE] ET AL) 23 December 2003 (2003-12-23) * the whole document * | 1 | |
| A,D | WO 2005/057471 A1 (ANOTO IP LIC HB [SE]; CRAVEN-BARTLE THOMAS [SE]; WASSVIK OLA [SE]; GRE) 23 June 2005 (2005-06-23) * the whole document * | 1 | |

-/--

The present search report has been drawn up for all claims

| Place of search | Date of completion of the search | Examiner |
|---|---|---|
| Munich | 13 January 2011 | Valin, Steven |

EPO FORM 1503 03.82 (P04C01)

Europäisches
Patentamt

European
Patent Office

Office européen
des brevets

**EUROPEAN SEARCH REPORT**

Application Number

EP 10 17 0672

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2009/279170 A1 (MIYAZAKI YUICHI [JP] ET AL) 12 November 2009 (2009-11-12) * the whole document * ----- | 1-9 | |
| | | | **TECHNICAL FIELDS SEARCHED (IPC)** |

The present search report has been drawn up for all claims

| Place of search | Date of completion of the search | Examiner |
|---|---|---|
| Munich | 13 January 2011 | Valin, Steven |

EPO FORM 1503 03.82 (P04C01)

## ANNEX TO THE EUROPEAN SEARCH REPORT
## ON EUROPEAN PATENT APPLICATION NO.

EP 10 17 0672

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2011

| Patent document cited in search report | | Publication date | Patent family member(s) | | Publication date |
|---|---|---|---|---|---|
| JP 2003256137 | A | 10-09-2003 | NONE | | |
| US 2009273577 | A1 | 05-11-2009 | NONE | | |
| WO 0148591 | A1 | 05-07-2001 | AU | 2567801 A | 09-07-2001 |
| | | | AU | 2567901 A | 09-07-2001 |
| | | | AU | 2569301 A | 09-07-2001 |
| | | | BR | 0016610 A | 03-09-2002 |
| | | | CA | 2394922 A1 | 05-07-2001 |
| | | | EP | 1244996 A1 | 02-10-2002 |
| | | | EP | 1244955 A1 | 02-10-2002 |
| | | | EP | 1259933 A2 | 27-11-2002 |
| | | | JP | 2003518688 T | 10-06-2003 |
| | | | JP | 2003518698 T | 10-06-2003 |
| | | | JP | 2003519423 T | 17-06-2003 |
| | | | MX | PA02006340 A | 13-12-2002 |
| | | | WO | 0148678 A1 | 05-07-2001 |
| JP 2001243006 | A | 07-09-2001 | NONE | | |
| JP 2002149331 | A | 24-05-2002 | NONE | | |
| US 6663008 | B1 | 16-12-2003 | US | 2004095337 A1 | 20-05-2004 |
| | | | US | 2004113898 A1 | 17-06-2004 |
| US 6667695 | B2 | 23-12-2003 | US | 2003085884 A1 | 08-05-2003 |
| WO 2005057471 | A1 | 23-06-2005 | AT | 425505 T | 15-03-2009 |
| | | | CN | 1918577 A | 21-02-2007 |
| | | | CN | 101256450 A | 03-09-2008 |
| | | | EP | 1697876 A1 | 06-09-2006 |
| | | | EP | 1956519 A1 | 13-08-2008 |
| | | | JP | 4583382 B2 | 17-11-2010 |
| | | | JP | 2007524155 T | 23-08-2007 |
| | | | KR | 20070004568 A | 09-01-2007 |
| | | | US | 2007114367 A1 | 24-05-2007 |
| | | | US | 2010328272 A1 | 30-12-2010 |
| US 2009279170 | A1 | 12-11-2009 | JP | 2009037311 A | 19-02-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0148591 A
- JP 2001243006 A
- JP 2002149331 A

- US 6663008 B
- US 6667695 B
- WO 05057471 A